Europäisches Patentamt

European Patent Office

Office européen des brevets

(11) Publication number:

**0 280 172**
**A2**

## (12) EUROPEAN PATENT APPLICATION

(21) Application number: 88102285.9

(51) Int. Cl.⁴: **H04Q 11/04** , H04Q 1/30

(22) Date of filing: **17.02.88**

(30) Priority: **27.02.87 IT 1952587**

(43) Date of publication of application:
**31.08.88 Bulletin 88/35**

(84) Designated Contracting States:
**DE ES FR GB**

(71) Applicant: **ETEFIN S.p.A.**
**Largo F.Ili Cervi 4**
**I-20090 Vimodrone (Milano)(IT)**

(72) Inventor: **Bonicoli, Paolo**
**V. le Assunta 101**
**I-20063 Cernusco Sul Naviglio Milano(IT)**
Inventor: **Carminati, Gianbattista**
**Via Padova 244**
**I-20132 Milano(IT)**
Inventor: **Buonfigliuoli, Giorgio**
**Via Veneto 13/1**
**I-20068 Peschiera Borromeo (Milano)(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) Digital device for generating PCM signals, in particular for digital telephone, data processing or image processing systems.

(57) A digital device for generating PCM signals, in particular for digital telephone, data processing or image processing systems, for feeding a PCM channel (17) with the samples of generic analog periodic signals stored therein, comprises a sample memory (140) containing the samples to be sent, a sample memory addresser (141), connected to the sample memory for addressing the location of the sample memory in which the samples to be transmitted are stored, and a control processor (120), connected to the addresser (141) to vary the transmission sequences of the signal samples and associate them with selectable time slots.

Fig. 2

# DIGITAL DEVICE FOR GENERATING PCM SIGNALS, IN PARTICULAR FOR DIGITAL TELEPHONE, DATA PROCESSING OR IMAGE PROCESSING SYSTEMS

The present invention relates to a digital device for generating PCM signals, in particular for telephone, data processing or image processing systems.

As is known, in the telephonic field, analog systems and exchanges are being gradually replaced with systems and exchanges of the digital type which, besides allowing a better processing and transmission of phonic or speech signals, also allow the execution of data processing functions and the integration of different tasks in a same system, in particular for example for the obtainment of an increasingly complete office automation and a more rational use of the available resources.

Furthermore, it is well known that said digital systems use, for the transmission of both phonic and data signals, a PCM time sharing coding, which allows simultaneous transmission on a single line of a plurality of signals, possibly appropriately sampled and sent, as successive sequences of groups of binary signals, in defined time intervals (time slots), on said channel, each signal being naturally associated with a different time slot in each transmission period.

Said systems, in particular those in the telephonic type, can have the need to send on the PCM channel, towards the terminals or the individual units constituting the system, generic periodic digital or analog signals (for example tones in the case of a telephone system) stored in a permanent manner and conveniently extracted in time slots freely selectable according to the requirements.

Given this situation, the aim of the present invention is indeed to provide a digital device for generating PCM signals, in particular for telephone, data processing or image processing systems, capable of allowing transmission, on a PCM channel, in convenient time slots, of samples of generic periodic signals stored within the generator itself.

Within this aim, a particular object of the present invention is to provide a generator capable of reliably and flexibly handling sending of the stored samples according to the requirements of the system in which it is included, and in particular of starting the transmission on the PCM channel of the required samples and to controllably modify or interrupt it at any instant.

Not least object of the present invention is to provide a generator which has high flexibility and adaptability for connection and inclusion in systems of different types, and has a simple structure and modest manufacturing costs.

This aim, the objects mentioned and others which will become apparent hereinafter, are achieved by the digital device for generating PCM signal, in particular for digital telephone, data processing or image processing systems, according to the invention, as defined in the accompanying claims.

The characteristics and advantages of the invention will become apparent from the following description of a preferred but not exclusive embodiment, illustrated only by way of non-limitative example in the accompanying drawings, wherein:

figure 1 illustrates the structure of the digital signals sent on the PCM channel; and

figure 2 is a detailed block diagram of the digital generator according to the invention.

For the exemplification of the solution according to the invention, it is assumed that the PCM channel, on which the periodic signals are to be sent, divided in a plurality of samdples formed by a group of eight bits each, comprises a bidirectional two-wire line having a frequency of 2048 Kbit/sec, so that, in a frame period of the duration of 125 $\mu$ sec, 32 time slots are transmitted, each containing 8 information bits related to a single terminal.

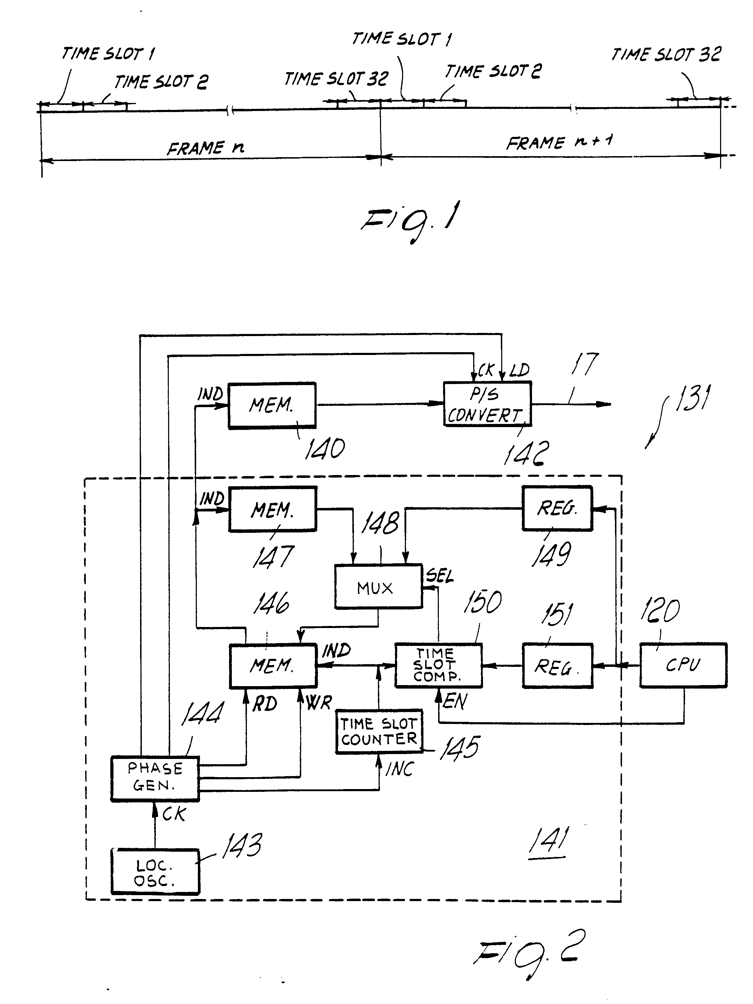

The structure of the signals transmitted on the PCM channel is apparent from fig. 1, wherein two frames (FRAMEn, FRAME + 1) are shown, each constituted by 32 time slots (indicated at TIME SLOT1...TIME SLOT32 in the figure) of eight bits, so that each frame is composed of 256 bits and has a duration of 125 $\mu$ sec.

Figure 2 instead illustrates the block diagram of the digital PCM signal generator, 131, having the purpose of sending, on a PCM channel 17, samples of generic analog periodic signals stored therein. Said samples are sent as above explained. In particular each analog periodic signal is formed by an own set of PCM samples resident within the generator 131 and precisely in the sample memory 140. The samples of each signal, each comprising eight bits, are thus sent in succession in different successive frames, associated with a specific time slot.

In its general structure, the digital generator 131 comprises the sample memory 140, storing the digital analog signals (for example tones) to be sent on the PCM channel 17, a sample memory addresser 141, which controls the repetitive extraction of the samples belonging to different signals in different time slots and the samples related to the same periodic analog signal in the same time slot of the different frames. a parallel/serial converter 142, which receives the samples in parallel format from the memory 140 and transforms them in serial format for transmission on the PCM channel 17. as well as a central processor 120 having the function of activating transmission on the PCM channel of the samples of the signals at a particular time slot or of modifying the transmission sequence of a signal, interrupting it or replacing it with another. In particular, the control processor 120 can be integrated in the digital generator according to the invention, dedicated only to the control functions thereof, or be part of the system in which the generator according to the invention will be included, thus being external to said generator.

In detail, the sample memory addresser 141 comprises a local oscillator 143 at 8192 KHz, driving a phase generator 144 and having the function of synchronizing and controlling the repetitive dynamics of the entire network. The phase generator is thus connected to the converter 142 on the inputs thereof indicated at CK and LD, to a time slot counter 145, which is periodically incremented upon the arrival, on the input INC, of a pulse supplied by the phase generator 144, and to a current address memory 146, which at each time slot, by means of suitable signals on the inputs RD and WR, is enabled respectively for reading and writing. In turn the current address memory 146 is connected at the output to the sample memory 140 and to a successive address memory 147 at the IND inputs thereof. The output of the successive address memory 147 is thus connected to a multiplexer 148 having another input connected to a tone address register 149, a selection input SEL connected to a time slot comparator 150 and an output connected to the current address memory 146 to selectively supply the memory 146 with the address supplied by the successive address memory 147 or by the tone address memory 149 according to the signal present on the input SEL. In turn, the tone address register 149 is driven at the input by the processor 120 which also controls a time slot address register 151 the output whereof is connected to the time slot comparator 150, furthermore enabled by the processor 120.

The operation of the digital generator 131 is as follows. At the beginning of each time slot the phase generator 144 supplies a pulse to the counter 145 the output value whereof (cyclically varying from 1 to 32) indicates which time slot of the frame is currently processed. The same output of the counter 145 constitutes the address of the current address memory 146 location containing the address of the sample memory 140 location storing the sample to be transmitted in the current time slot, the latter address corresponding to the address of the successive address memory 147 location which contains the address of the sample successively to the one addressed in the current time slot. Accordingly, at the beginning of an each time slot, the current address memory, set in read state by the signal supplied at the input RD by the phase generator, immediately feeds the memories 140 and 147 with the address stored in its location currently 140 and 147 with the address stored in its location currently addressed by counter 145. The PCM sample to be transmitted is thus taken from the sample memory 140, is loaded in the converter 142 and sent on the PCM channel 17 in synchronism with the signals supplied by the phase generator 144 at the inputs CK and LD of said converter. Simultaneously the successive address memory 147 supplies the address of the current address memory location containing the address of the successive sample to be sent in the successive frame at the same time slot. Said address is then supplied to the multiplexer 148 which in this phase is set so as to allow its transit towards the current address memory which stores it in the location associated with the current time slot under control of the phase generator through the input WR. This new address thus corresponds to the sample which will become current in the same time slot of the successive frame.

At the expiration of the time dedicated to the time slot, the phase generator 144 emits a new pulse for the increment of the time slot counter 145, thus causing cyclic repetition of the same procedure for the successive time slots.

The correspondence between the analog periodic signal and the time slot is however not rigid: the control processor 120 can, in fact, activate or deactivate the repetitive emission of the samples of a signal acting on the sample memory addresser, in particular on the blocks 149-151. In detail, start of the transmission of the PCM samples of a signal in a particular time slot is performed by the processor 120 which introduces, in the tone address register 149, the address of the sample memory 140 location storing the first sample of the signal to be sent and, in the time slot address register 151, the number of the time slot to be associated with the signal. The processor 120 thus enables the time slot comparator 150 which compares the output value of the time slot counter with the value stored in the time slot address register 151. When the two values become equal, that is to say when the specified time slot is to be processed, the time slot comparator 150 sends a suitable signal on the input SEL of the multiplexer 148, thus causing the content of the tone address memory 149 to be sent towards the current address memory 146 and to be stored in said memory at the location associated with the desired time slot. At the end of said storing, in the instant in which the time slot counter 145 changes state, the time slot comparator disables automatically so that in the successive frame the content of the tone address register 149 is not rewritten into the current address memory. By means of this procedure, the processor 120 is therefore capable of disabling the repetitive emission of the successive samples of a signal, inhibiting the storage of the address supplied at that instant by the successive address memory 147 and starting a different signal in the same time slot or setting the time slot to the idle state by means of the transmission of a null signal. For this purpose the sample memory also stores a single sample corresponding to a null signal which is repeatedly sent on the PCM channel at the same time slot in idle state.

In practice, in the sample memory 140 (which conveniently can be constituted by a ROM or by a previously loaded RAM) a number of samples corresponding to a whatever plurality of analog periodic signals can be present and the digital generator 131 can selectively activate any set formed by 32 (equal or different) signals in the same frame. Naturally the number of the different types of analog signals is limited only by the capacity of the sample memory, which thus will vary according to the requirements, exactly as occurs for the successive address memory 147, identical to the sample memory 140 since each sample must address a successive sample. On the contrary the current address memory has a size equal to 32 locations, one for each time slot.

The invention thus conceived is susceptible to numerous modifications and variations, all of which are within the scope of the inventive concept.

Furthermore all the details may be replaced with other technically equivalent elements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A digital device for generating PCM signals, in particular for digital telephone, data processing or image processing systems, characterized in that it comprises a sample memory (140) having a plurality of memory locations storing signal samples to be transmitted, a sample memory addresser (141), connected to said sample memory (140) for addressing the memory location of said sample memory containing the sample to be transmitted, and a control processor (120), connected to said addresser (141) for varying transmission sequences of the signal samples and associating them with selectable time slots.

2. A device according to claim 1, characterized in that said sample memory (140) contains said samples in parallel form and in that it furthermore comprises a parallel/serial converter (142), connected to said sample memory (140) and to a PCM bus (17), said parallel/serial converter receiving said signal samples in parallel form from said sample memory and sending said samples serially on said PCM bus.

3. A device according to one or more of the preceding claims, characterized in that said sample memory addresser (141) comprises a timing phase generator (144), a time slot counter (145), connected to said phase generator and generating a signal indicative of a current time slot, a successive address memory (147), having memory locations univocally connected to said memory locations of said sample memory (140) and storing an address of a successive signal sample for each signal sample stored in said memory locations of said sample memory, and a current address memory (146) having a first address input (IND) connected to said time slot counter (145), a second data input connected to said successive address memory (147) and an output connected to said sample memory (140) and said successive address memory (147), said current address memory being controlled by said time slot counter (145) and said phase generator to address the memory location of said sample memory storing a current signal sample and to address the memory location of said successive address memory storing the successive signal sample and, then, to store the address of said successive signal sample.

4. A device according to one or more of the preceding claims, characterized in that said sample memory addresser (141) further comprises a tone address register (149), connected to said control processor (120) and receiving therefrom the address of a first sample of a periodic signal to be sent, a time slot address register (151), connected to said control processor (120) and receiving therefrom a signal corresponding to the time slot to be associated to said periodic signal to be sent, a time slot comparator (150), connected to said time slot address register (151) and said time slot counter (145), for generating a selection signal when the time slot specified by said time slot counter corresponds to the time slot specified by said time slot address register (151) and a multiplexer (148) having a first input connected to said successive address memory (147), a second input connected to said tone address register (149) and an output connected to said current address memory (146), said multiplexer (148) being controlled by said selection so as to selectively connect its output with one of said first and second multiplexer inputs.

Fig. 1

Fig. 2